# EUROPÄISCHE PATENTSCHRIFT

(11) **EP 1 080 965 B1**
(45) Veröffentlichungstag und Bekanntmachung des Hinweises auf die Patenterteilung: **08.03.2006**
(21) Anmeldenummer: 00118355.7
(22) Anmeldetag: 24.08.2000
(51) Int. Cl.: B60J 7/12, B62D 25/12

(54) **Antriebsvorrichtung für ein Schwenkbauteil**
Actuating device for a pivotable element
Dispositif d'entraînement pour élément pivotant

(30) Priorität: 30.08.1999 DE 19941207
(43) Veröffentlichungstag der Anmeldung: 07.03.2001
(73) Patentinhaber: Webasto Vehicle Systems International GmbH, 82131 Stockdorf (DE)
(72) Erfinder: Langguth, Martin, 82152 Krailling (DE); Schütt, Thomas, 82256 Fürstenfeldbruck (DE)
(74) Vertreter: Wiese, Gerhard

(56) Entgegenhaltungen:
- EP-A- 0 351 378
- EP-A- 0 425 156
- EP-A- 0 733 505
- EP-A- 0 897 823
- US-A- 5 758 923
- US-A- 5 772 274

## Beschreibung

Die Erfindung betrifft eine Antriebsvorrichtung für ein Schwenkbauteil, das vorzugsweise an einem Fahrzeug schwenkbar gelagert, über eine Koppeleinrichtung mit einem Antrieb verbunden und durch diesen verschwenkbar ist, wobei die Koppeleinrichtung ein Verbindungsteil aufweist, das über einen Verbindungslenker mit dem Schwenkbauteil verbunden, vom Antrieb antreibbar und entlang einer Führungsbahn bewegbar gelagert ist.

Eine Vorrichtung nach dem Oberbegriff des Anspruchs 1 ist aus der EP 0 733 505 bekannt.

Es ist bekannt, Schwenkbauteile an einem Fahrzeug, wie z. B. die Schwenklagerung eines Faltverdecks eines Cabriolets, über einen Hydraulikantrieb mit einem Hydraulikzylinder oder über einen elektrischen Antrieb mit einem Zahnradgetriebe zu betätigen. Diese Antriebsvorrichtungen zeichnen sich jedoch durch eine aufwendige Bauweise, hohe Kosten, einen großen erforderlichen Bauraum und/oder durch ein lautes Motorengeräusch bei dem in der Nähe der Fahrzeuginsassen angeordneten Elektromotor aus. Zudem ändert sich der Hebelarm während der Schwenkbewegung, so daß auch das übertragene Antriebsdrehmoment variiert, und der Schwenkwinkel ist bei einem Hydraulikantrieb konstruktiv üblicherweise auf weniger als 180° begrenzt.

Aufgabe der Erfindung ist es, eine eingangs genannte Antriebsvorrichtung zu schaffen, deren Aufbau vereinfacht und deren Betriebsweise verbessert ist.

Diese Aufgabe wird bei der eingangs genannten Antriebsvorrichtung erfindungsgemäß dadurch gelöst, daß die Führungsbahn eine kreisbogenförmige Führungsschiene ist, deren Kreismittelpunkt auf der Drehachse des Schwenkbauteils liegt oder als räumliche Kurve gebildet ist. Somit wird bei dieser Antriebsvorrichtung aufgrund des gleichbleibenden Abstandes jedes Punktes auf der Führungsbahn zu der Schwenkachse eine gleichmäßige Antriebsbewegung in eine gleichmäßige Bewegung des Schwenkbauteils umgesetzt. Damit ist auch ein komplizierter Übertragungsmechanismus für die Antriebsbewegung nicht erforderlich.

Die Antriebskraft und -bewegung wird über das Verbindungsteil auf die Führungsbahn gelenkt werden, das an der Führungsbahn verschiebbar gelagert sein kann oder es ist von einem anderen Bauteil bewegbar gehalten, das ihm eine der Führungsbahn folgende Bewegung aufprägt.

Vorteilhafte Ausgestaltungen der Erfindung sind in den Unteransprüchen angegeben.

In bevorzugter Ausgestaltung enthält die Koppeleinrichtung ein Antriebskabel, das in einem Rohr zu der Führungsbahn geführt und mit dem Verbindungsteil verbunden ist. Das Antriebskabel ermöglicht eine Anordnung des Antriebsmotors sowohl nahe bei dem Schwenkbauteil bzw. der Führungsbahn wie auch entfernt davon und bietet damit zusätzliche Einbaupositionen im Fahrzeug, die weitgehend unabhängig von der Position des Schwenkbauteils sind. So können die hörbaren Betriebsgeräusche des Antriebsmotors durch einen gedämmten und/oder von den Insassen entfernten Position reduziert werden, wie dies von Antriebsmotoren von Schiebedächern bekannt ist, die entfernt von der Betätigungsmechanik eines zu öffnenden Deckels an einem vorderen Querträger oder im Kofferraum untergebracht sind. Das in dem Rohr geführte Antriebskabel kann sowohl Zug- wie auch Druckkräfte übertragen und kann auf weitgehend beliebigem Weg in der Karosserie geführt werden. Das Antriebskabel kann zu zwei Schwenkbauteilen geführt sein, die im synchronen Gleichlauf betätigt werden können oder es werden mittels eines Ritzels zwei Antriebskabel synchron angetrieben.

Durch seine Biegbarkeit kann das Antriebskabel auch gekrümmten Führungsbahnen folgen. Ein über die Führungsbahn hinauslaufender Abschnitt des Antriebskabels kann mit weiteren Bauteilen verbunden sein und damit zusätzliche Bewegungsfunktionen ausführen. Die Antriebsvorrichtung enthält somit nur wenige Bauteile und kann mit geringem Bauraum im Fahrzeug untergebracht werden.

Da die kreisbogenförmige Führungsschiene einen konstanten radialen Abstand zur Drehachse des Schwenkbauteils über den Schwenkweg aufweist und auch ein Antriebskabel dieser Führungsbahn folgt, wird die Antriebskraft und die Antriebsbewegung des Antriebskabels gleichmäßig auf das Schwenkbauteil übertragen. Mit der kreisbogenförmigen Führungsschiene sind Drehwinkel bis zu etwa 360° realisierbar.

Eine alternative Gestaltung sieht vor, daß die Führungsbahn als räumliche Kurve gebildet ist, die von einer ebenen Kreisbogenführung abweicht. Damit lassen sich weitgehend beliebige Bewegungsübertragungen an der Antriebsvorrichtung ausführen, wobei auch Zusatzfunktionen vom Antriebskabel gesteuert werden können, die z. B. durch Ankoppeln von Bauteilen auf dem räumlichen Bewegungsweg der Führungsbahn ausführbar sind. Zweckmäßigerweise ist dann der Verbindungslenker an dem Schwenkbauteil um eine Schwenkachse, die zur Schwenkachse des Schwenkbauteils in etwa senkrecht steht, schwenkbar gelagert, um bei der Übertragung der Antriebsbewegung auf das Schwenkbauteil der Raumkurve zu folgen. Dabei kann es auch vorteilhaft sein, wenn der Verbindungslenker in seiner Länge veränderbar und an den sich ändernden Abstand zwischen der Drehachse des Schwenkbauteils und dem Verbindungsteil an der Führungsbahn der Raumkurve anpaßbar ist.

Zweckmäßigerweise sind das Schwenkbauteil und die Führungsbahn bzw. Führungsschiene an einem fahrzeugfesten Hauptlager gelagert, so daß eine kompakte Baueinheit gebildet ist.

Vorzugsweise ist das Verbindungsteil eine Kabelanbindung, die in der Führungsschiene in einem Führungskanal für das Antriebskabel aufgenommen ist, durch einen Längsschlitz nach außen greift und mit dem Verbindungslenker verbunden ist. Zur gegenseitigen Anpassung ist es zweckmäßig, daß das Kabelverbindungsteil an die Krümmung der Führungsschiene angepaßt ist.

Um ein Klemmen der Antriebsvorrichtung zu verhindern, kann die kreisbogenförmige Führungsschiene mit Spiel am Hauptlager gelagert sein, oder der Spielausgleich erfolgt an der Anbindung zum Schwenkbauteil. Das Spiel wird derart festgelegt, daß auch bei Verwindungen eines vom Schwenkbauteil bewegten Teils, beispielsweise eines Faltverdecks, der radiale Abstand von der Drehachse des Schwenkbauteils zur Kabelanbindung im wesentlichen konstant bleibt.

Es kann vorgesehen sein, daß eine Zusatzbetätigung von der Antriebsvorrichtung ausführbar ist. Für die Zusatzbetätigung kann ein Auslaufabschnitt des Antriebskabels mit einem zu betätigenden Bauteil verbunden sein.

Als Antrieb kann ein Elektromotor oder mehrere in Reihe geschaltete Elektromotoren vorgesehen sein. Jedoch eignen sich prinzipiell auch Hydraulik- oder Pneurnatikmotore, die z. B. auf ein Gleitelement in der Führungsschiene wirken.

Die Antriebsvorrichtung kann mit einem Scheibenwischer, insbesondere einem Heckscheibenwischer eines Kraftfahrzeugs, gekoppelt sein. In einer bevorzugten Anwendung ist sie mit einem Faltverdeck eines Cabriolet gekoppelt, wobei das Schwenkbauteil eine Hauptsäule eines parallelogrammartigen Viergelenkmechanismus zum schwenkbaren Lagern eines Verdeckgestänges des Faltverdecks ist, und der Viergelenkmechanismus die Hauptsäule und einen Hauptlenker enthält, die einerseits an dem karosseriefesten Hauptlager und andererseits an einem seitlichen Dachlenker des Verdeckgestänges schwenkbar gelagert sind. Für den synchronen Antrieb der rechtsseitigen und der linksseitigen Hauptsäule ist es dann zweckmäßig, wenn das Antriebskabel die beiden Schwenkbauteile bzw. Hauptsäulen gleichzeitig antreibt.

Nachfolgend wird ein Ausführungsbeispiel der Erfindung unter Bezugnahme auf Zeichnungen näher erläutert. Es zeigt:
- Fig. 1: in einer perspektivischen Ansicht ein Ausführungsbeispiel einer Antriebsvorrichtung in einer ersten Bewegungsstellung;

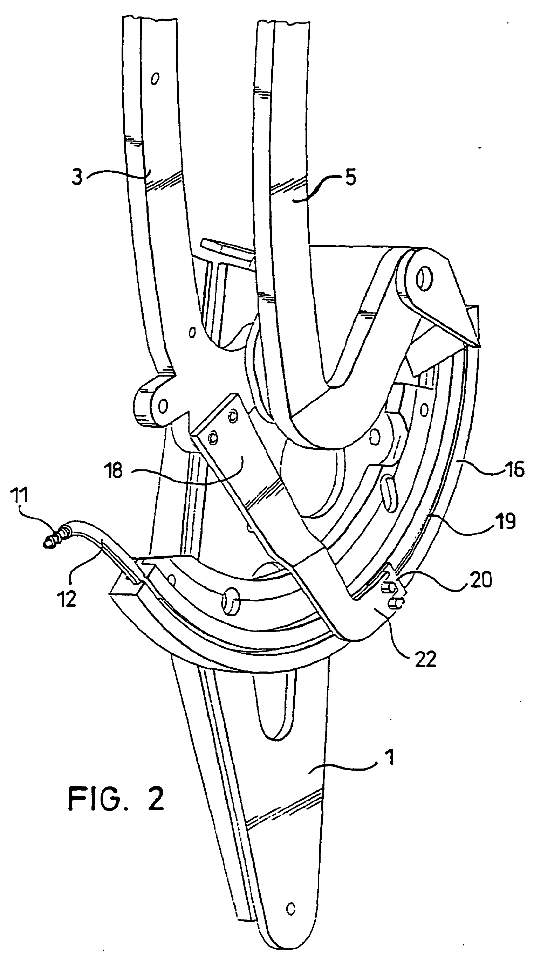

- Fig. 2: in einer seitlichen Draufsicht das Ausführungsbeispiel der Antriebsvorrichtung in einer zweiten Bewegungsstellung;

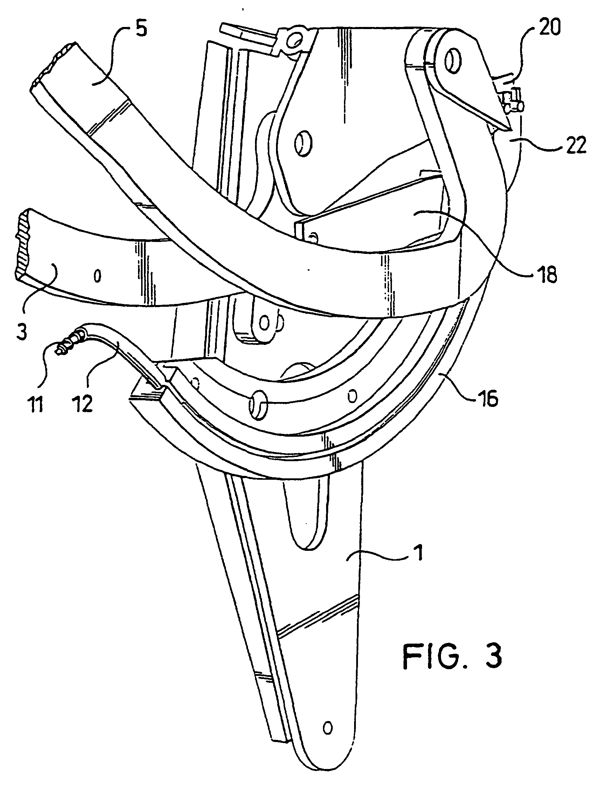

- Fig. 3: in einer seitlichen Draufsicht das Ausführungsbeispiel der Antriebsvorrichtung in einer dritten Bewegungsstellung;
- Fig. 4: in einer seitlichen Draufsicht das Ausführungsbeispiel in seiner ersten Bewegungsstellung gemäß Fig. 1;

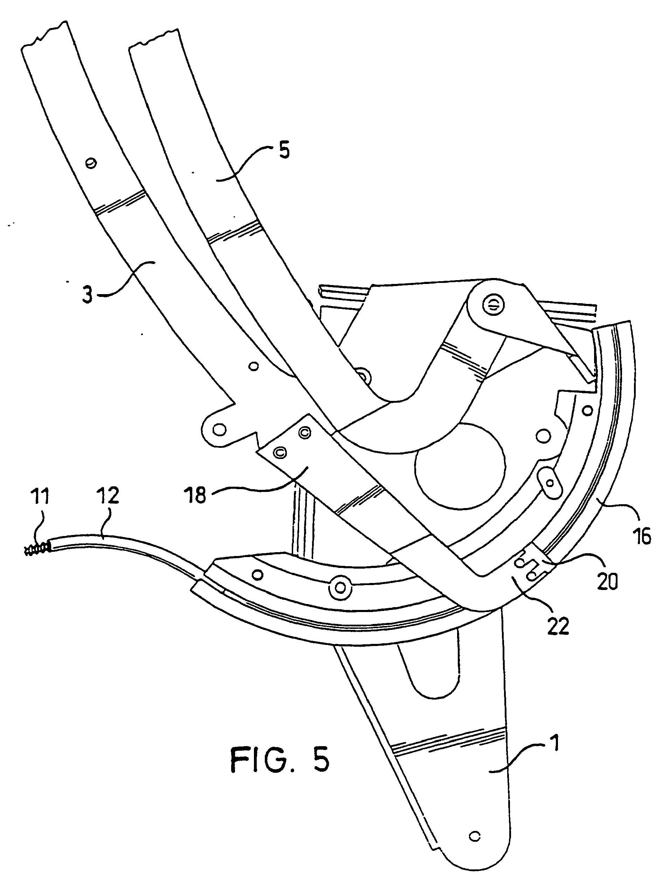

- Fig. 5: in einer seitlichen Draufsicht das Ausführungsbeispiel der Antriebsvorrichtung in seiner zweiten Bewegungsstellung gemäß Fig. 2;

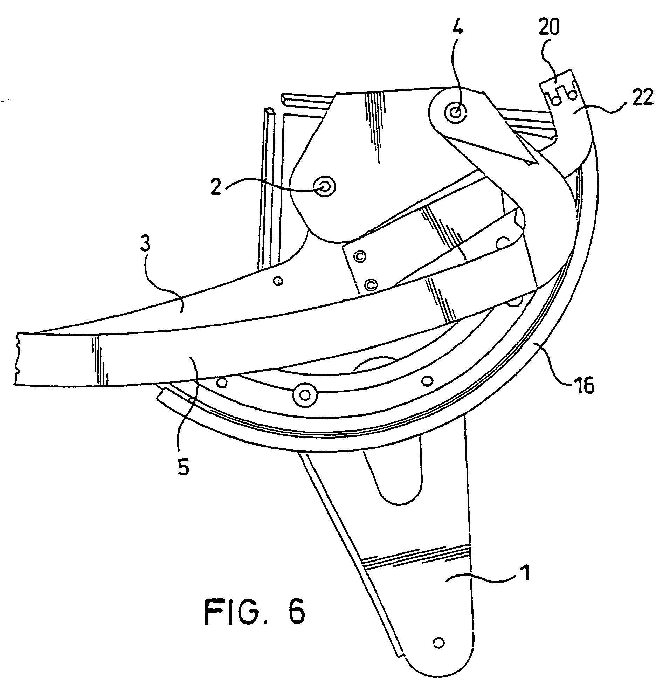

- Fig. 6: in einer seitlichen Draufsicht das Ausführungsbeispiel der Antriebsvorrichtung in seiner dritten Bewegungsstellung gemäß Fig. 3; und
- Fig. 7: in einer seitlichen Draufsicht in schematischer Darstellung ein Cabriolet mit einem Faltverdeck und der erfindungsgemäßen Antriebsvorrichtung.

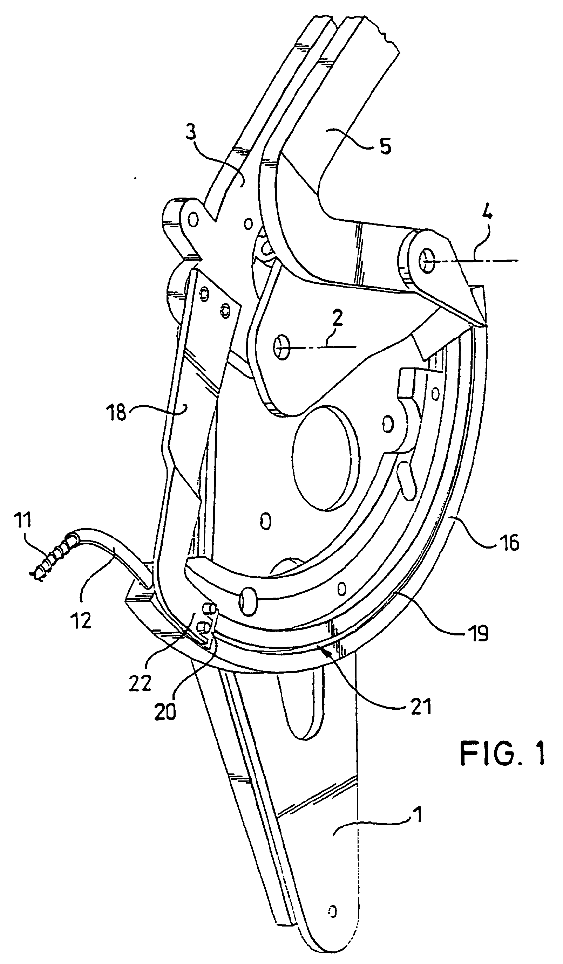

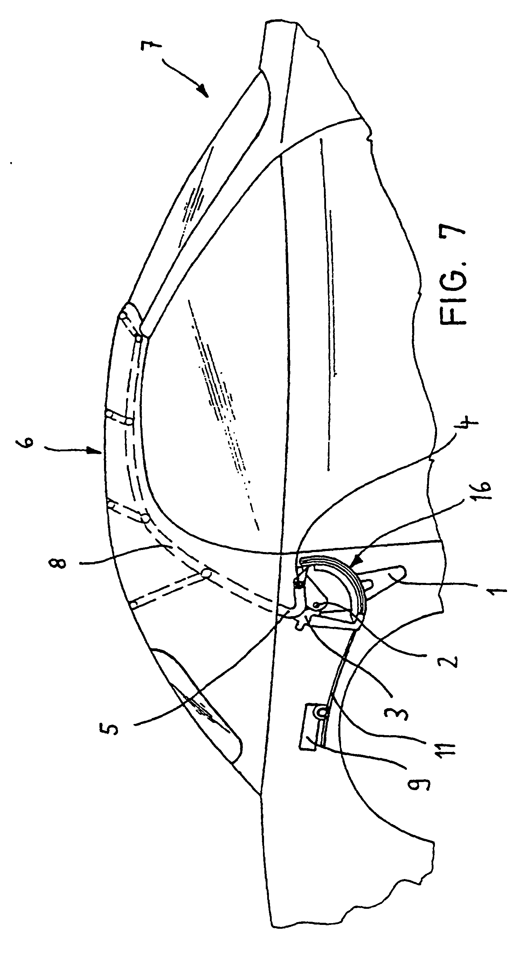

Ein Schwenkbewegungsmechanismus eines Faltverdecks 6 eines Cabriolet 1 mit einer erfindungsgemäßen Antriebsvorrichtung enthält (siehe insbesondere Fig. 1 und 7) ein am Fahrzeug fest angebrachtes Hauptlager 1, das ein Trägerbauteil oder eine Trägerplatte darstellt, eine am Hauptlager 1 um eine Drehachse 2 schwenkbar gelagerte Hauptsäule 3 als antreibbares und zu verschwenkendes Schwenkbauteil und einen am Hauptlager 1 um eine Drehachse 4 schwenkbar gelagerten Hauptlenker 5. Die Hauptsäule 3 und der Hauptlenker 5 sind an ihren jeweils gegenüberliegenden Enden an einem Dachlenker 8, der lediglich in Fig. 7 schematisch dargestellt ist, schwenkbar angelenkt und bilden mit diesem einen parallelogrammartigen Viergelenkmechanismus.

Die Antriebsvorrichtung weist eine Führungsschiene 16 auf, die in Form eines Kreisbogenabschnitts gebildet ist und an dem Hauptlager 1 derart angebracht ist, daß ihr Kreisbogenmittelpunkt auf der Schwenkachse 2 der Hauptsäule 3 liegt.

Ein Verbindungslenker 18 ist an der Hauptsäule 3 fest angebracht und erstreckt sich bis über die einen seitlichen Längsschlitz 19 aufweisende Führungsschiene 16. Eine an einem Antriebskabel 11 befestigte Kabelanbindung 20 ist in einem Führungskanal 21 für das Antriebskabel 11 aufgenommen, greift durch den Längsschlitz 19 nach außen und ist mit dem freien Ende 22 des Verbindungslenkers 18 verbunden. Das Antriebskabel 11 verläuft von einem Antriebsmotor 9, beispielsweise einem Elektromotor, durch eine schlauchartige Ummantelung oder ein Rohr 12 zu der Kabelanbindung 20.

Wenn das Antriebskabel 11 durch den Antriebsmotor 9 in die Führungsschiene 16 hinein verschoben wird, nimmt die Kabelanbindung 20 das freie Ende 22 des Verbindungslenkers 18 mit, der wiederum die Hauptsäule 3 um die Drehachse 2 verschwenkt. Da sich das freie Ende 22 entlang der kreisbogenförmigen Führungsschiene 16 bewegt und das Antriebskabel 11 ebenso in der Führungsschiene 16 der Kreisbahn folgt, ist durch den konstanten radialen Abstand von der Kabelanbindung 20 zur Drehachse 2 eine gleichmäßige Bewegungsübertragung der Antriebsbewegung auf die Schwenkbewegung der Hauptsäule ohne eine Drehmomentveränderung gewährleistet. Dabei ist durch den Radius der Kreisbahn ein hohes Drehmoment auf den Verbindungslenker 18 und somit auf das Schwenkbauteil 3 übertragbar. Dadurch kann mit einem relativ schwachen Elektromotor vorteilhaft ein relativ schweres Bauteil bewegt werden.

Die Führungsschiene 16 kann an dem Hauptlager 1 derart befestigt sein, daß sie sich insbesondere radial und/oder parallel zur Drehachse 2 um ein geringes Maß bewegen kann. Damit kann sie sich bei einer Verwindung des Faltverdecks und der Hauptsäule 3 der Schwenkbewegung des Verbindungslenkers 18 anpassen, wodurch ein Klemmen der Kabelanbindung 20 in der Führungsschiene 16 verhindert wird. Andererseits kann eine Anpassung auch dadurch vorgenommen werden, daß die Kabelanbindung 20 selbst eine flexible Lagerung an dem freien Ende 22 des Verbindungslenkers 18 aufweist.

Zur Gewichtsentlastung für das Faltverdeck 6 kann eine Gasfeder zwischen der Hauptsäule 3 oder dem Hauptlenker 5 und einem karosseriefesten Teil angeordnet sein. Wie von Schiebedachantrieben her bekannt ist, treibt der Elektromotor 9 mit einem Ritzel vorzugsweise zwei Antriebskabel 11 synchron an. Wird die erfindungsgemäße Antriebsvorrichtung beispielsweise für die Erzeugung einer Schwenkbewegung eines Cabrioletverdecks verwendet, so treiben die Antriebskabel synchron die Schwenkhebel (Hauptsäule 3) auf beiden Seiten des Verdecks an. Bei bekannten hydraulisch betätigten Verdecken bereitet der Gleichlauf beider Schwenkhebel, die jeweils von einem eigenen Hydraulikzylinder angetrieben werden, steuerungstechnisch einigen Zusatzaufwand.

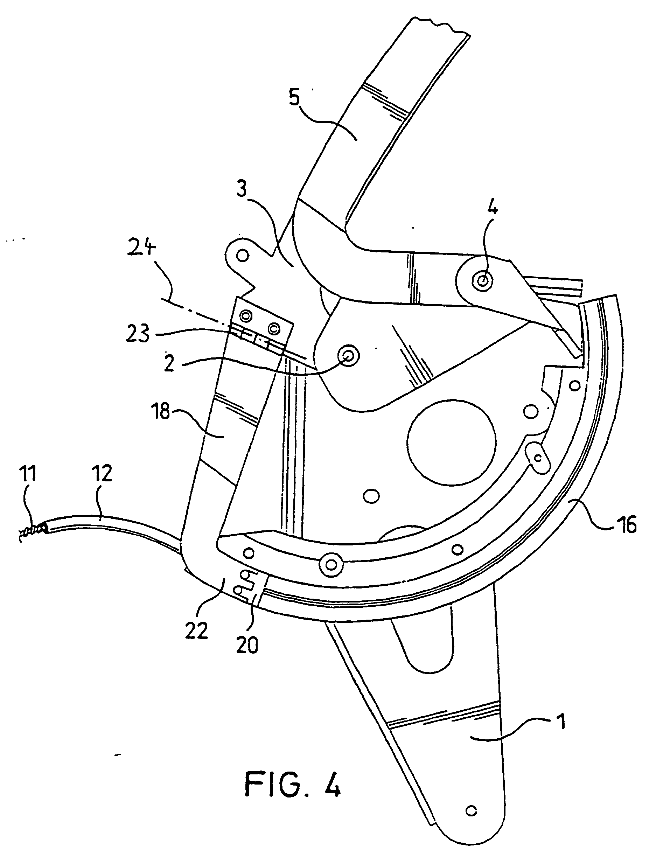

Gemäß einer Ausführungsform kann der Verbindungslenker 18 ein in Fig. 4 schematisch dargestelltes Scharnier oder Gelenk 23 aufweisen, so daß er an der Hauptsäule 3 um eine Schwenkachse 24, die zur Schwenkachse 2 der Hauptsäule 3 in etwa senkrecht steht, schwenkbar gelagert ist. Bei der Übertragung der Antriebsbewegung auf die Hauptsäule 3 kann der Verbindungslenker 18 somit der Führungsschiene 16, die als räumliche Kurve gebildet ist (nicht dargestellt), folgen.

Dabei kann es zweckmäßig sein, wenn der Verbindungslenker 18 in seiner Länge veränderbar ist und sich an den sich ändernden Abstand zwischen der Drehachse 2 der Hauptsäule 3 und der Kabelanbindung 20, die an der einer räumlichen Kurve angepaßten Führungsschienen 16 geführt ist, anpassen kann. Der Verbindungslenker 18 enthält z. B. zwei in Längsrichtung gegeneinander verschiebbare Teile und ist somit teleskopierbar (nicht dargestellt).

Auch wenn vorstehend nur ein Ausführungsbeispiel bei einem Cabrioletverdeck eines Fahrzeugs beschrieben wurde, ist die Erfindung bei vielen Arten von schwenkbaren Teilen, wie beispielsweise bei Garagentorantrieben, Trommelkippvorrichtungen von Betonmischern, jede Art von Klappen, wie Fenstern, Lüftungsdeckeln oder dergleichen, vorteilhaft zu verwenden.

### Bezugszeichenliste

- 1: Hauptlager
- 2: Drehachse
- 3: Hauptsäule
- 4: Drehachse
- 5: Hauptlenker
- 6: Faltverdeck
- 7: Cabriolet
- 8: Dachlenker
- 9: Antriebsmotor
- 10:
- 11: Antriebskabel
- 12: Rohr
- 13:
- 14:
- 5:
- 16: Führungsschiene
- 17:
- 18: Verbindungslenker
- 19: Längsschlitz
- 20: Kabelanbindung
- 21:
- 22: freies Ende
- 23: Gelenk
- 24: Schwenkachse

## Patentansprüche

1. Antriebsvorrichtung für ein Schwenkbauteil, das beispielsweise an einem Fahrzeug schwenkbar gelagert, über eine Koppeleinrichtung mit einem Antrieb verbunden und durch diesen verschwenkbar ist, wobei die Koppeleinrichtung ein Verbindungsteil (20) aufweist, das über einen Verbindungslenker (18) mit dem Schwenkbauteil (3) verbunden, vom Antrieb antreibbar und entlang einer Führungsbahn (16) bewegbar gelagert ist,
**dadurch gekennzeichnet,**
**daß** die Führungsbahn eine kreisbogenförmige Führungsschiene (16) ist, deren Kreismittelpunkt auf der Drehachse (2) des Schwenkbauteils (3) liegt oder als räumliche Kurve gebildet ist.

2. Antriebsvorrichtung nach Anspruch 1,
**dadurch gekennzeichnet, daß** die Koppeleinrichtung ein Antriebskabel (11) enthält, das in einem Rohr (12) zu der Führungsbahn (16) geführt und mit dem Verbindungsteil (20) verbunden ist.

3. Antriebsvorrichtung nach Anspruch 1 oder 2,
**dadurch gekennzeichnet, daß** der Verbindungslenker (18) an dem Schwenkbauteil (3) um eine Schwenkachse (24), die zur Schwenkachse (2) des Schwenkbauteils (3) in etwa senkrecht steht, schwenkbar gelagert ist, um bei der Übertragung der Antriebsbewegung auf das Schwenkbauteil (3) einer räumlichen Kurve zu folgen.

4. Antriebsvorrichtung nach Anspruch 1 oder 3,
**dadurch gekennzeichnet, daß** der Verbindungslenker (18) in seiner Länge veränderbar und an den sich ändernden Abstand zwischen der Drehachse (2) des Schwenkbauteils (3) und dem Verbindungsteil (20) an der Führungsbahn (16) der räumlichen Kurve anpaßbar ist.

5. Antriebsvorrichtung nach einem der Ansprüche 1 bis 4,
**dadurch gekennzeichnet, daß** das Schwenkbauteil (3) und die Führungsbahn bzw. Führungsschiene (16) an einem fahrzeugfesten Hauptlager (1) gelagert sind.

6. Antriebsvorrichtung nach Anspruch 5,
**dadurch gekennzeichnet, daß** die kreisbogenförmige Führungsschiene (16) mit Spiel am Hauptlager (1) gelagert ist.

7. Antriebsvorrichtung nach einem der Ansprüche 1 bis 6,
**dadurch gekennzeichnet, daß** das Verbindungsteil (20) eine Kabelanbindung (20) ist, die in der Führungsschienen (16) in einem Führungskanal (21) für das Antriebskabel (11) aufgenommen ist, durch einen Längsschlitz (19) nach außen greift und mit dem Verbindungslenker (18) verbunden ist.

8. Antriebsvorrichtung nach Anspruch 7,
**dadurch gekennzeichnet, daß** das Kabelverbindungsteil (22) an die Krümmung der Führungsschiene (16) angepaßt ist.

9. Antriebsvorrichtung nach einem der Ansprüche 1 bis 8,
**dadurch gekennzeichnet, daß** eine Zusatzbetätigung von der Antriebsvorrichtung ausführbar ist.

10. Antriebsvorrichtung nach Anspruch 9,
**dadurch gekennzeichnet, daß** für eine Zusatzbetätigung ein Auslaufabschnitt des Antriebskabels (11) mit einem zu betätigenden Bauteil verbunden ist.

11. Antriebsvorrichtung nach einem der Ansprüche 1 bis 10,
**dadurch gekennzeichnet, daß** der Antrieb einen Elektromotor (9) oder mehrere in Reihe geschaltete Elektromotoren aufweist.

12. Antriebsvorrichtung nach einem der Ansprüche 1 bis 11,
**dadurch gekennzeichnet, daß** sie mit einem Scheibenwischer, insbesondere einem Heckscheibenwischer eines Kraftfahrzeugs, gekoppelt ist.

13. Antriebsvorrichtung nach einem der Ansprüche 1 bis 11,
**dadurch gekennzeichnet, daß** sie mit einem Faltverdeck (6) eines Cabriolet (7) gekoppelt ist.

14. Antriebsvorrichtung nach Anspruch 13,
**dadurch gekennzeichnet, daß** das Schwenkbauteil (3) eine Hauptsäule (3) eines parallelogrammartigen Viergelenkmechanismus zum schwenkbaren Lagern eines Verdeckgestänges des Faltverdecks (6) ist, wobei der Viergelenkmechanismus die Hauptsäule (3) und einen Hauptlenker (11) enthält, die einerseits an dem karosseriefesten Hauptlager (1) und andererseits an einem seitlichen Dachlenker (8) des Verdeckgestänges schwenkbar gelagert sind.

15. Antriebsvorrichtung nach einem der Ansprüche 2 bis 14,
**dadurch gekennzeichnet, daß** das Antriebskabel (11) zwei Schwenkbauteile gleichzeitig antreibt.

## Claims

1. Actuating device for a pivotable element which, for example, is pivotably mounted on a vehicle, is connected via a coupling device to a drive and can be pivoted by the latter, the coupling device having a connecting part (20) which is connected to the pivotable element (3) via a connecting link (18), can be driven by the drive and is mounted such that it can move along a guide track (16), **characterized in that** the guide track is a guide rail (16) in the form of a circular arc, whose circular centre lies on the axis of rotation (2) of the pivotable element (3) or is formed as a three-dimensional curve.

2. Actuating device according to Claim 1, **characterized in that** the coupling device contains a drive cable (11), which is led to the guide track (16) in a tube (12) and is connected to the connecting part (20).

3. Actuating device according to Claim 1 or 2, **characterized in that** the connecting link (18) is mounted on the pivotable element (3) such that it can pivot about a pivot axis (24) which is approximately perpendicular to the pivot axis (2) of the pivotable element (3), in order to follow a three-dimensional curve when transmitting the actuating movement to the pivotable element (3).

4. Actuating device according to Claim 1 or 3, **characterized in that** the length of the connecting link (18) can be varied and can be matched to the changing distance between the axis of rotation (2) of the pivotable element (3) and the connecting part (20) on the guide track (16) of the three-dimensional curve.

5. Actuating device according to one of Claims 1 to 4, **characterized in that** the pivotable element (3) and the guide track or guide rail (16) are mounted on a main bearing (1) fixed to the vehicle.

6. Actuating device according to Claim 5, **characterized in that** the guide rail (16) in the shape of a circular arc is mounted on the main bearing (1) with play.

7. Actuating device according to one of Claims 1 to 6, **characterized in that** the connecting part (20) is a cable attachment (20) which is accommodated in the guide rails (16) in a guide channel (21) for the drive cable (11), reaches outwards through a longitudinal slot (19) and is connected to the connecting link (18).

8. Actuating device according to Claim 7, **characterized in that** the cable connecting part (22) is matched to the curvature of the guide rail (16).

9. Actuating device according to one of Claims 1 to 8, **characterized in that** an additional actuation can be carried out by the actuating device.

10. Actuating device according to Claim 9, **characterized in that**, for an additional actuation, a terminating section of the drive cable (11) is connected to a component to be actuated.

11. Actuating device according to one of Claims 1 to 10, **characterized in that** the drive has an electric motor (9) or a plurality of electric motors connected in series.

12. Actuating device according to one of Claims 1 to 11, **characterized in that** it is coupled to a windscreen wiper, in particular a rear windscreen wiper of a motor vehicle.

13. Actuating device according to one of Claims 1 to 11, **characterized in that** it is connected to a folding hood (6) of a convertible (7).

14. Actuating device according to Claim 13, **characterized in that** the pivotable element (3) is a main column (3) of a parallelogram-type four-bar linkage mechanism for the pivotable mounting of a hood linkage of the folding hood (6), the four-bar linkage mechanism containing the main column (3) and a main link (11) which, at one end, are mounted on the main bearing (1) fixed to the bodywork and, at the other end, are pivotably mounted on a lateral roof link (8) of the hood linkage.

15. Actuating device according to one of Claims 2 to 14, **characterized in that** the drive cable (11) drives two pivotable elements at the same time.

## Revendications

1. Dispositif d'entraînement pour un élément pivotant, qui est par exemple monté de façon pivotante sur un véhicule, est relié à un entraînement par un système d'accouplement et peut être pivoté par celui-ci, le système d'accouplement comprenant un organe de raccordement (20) qui est relié à l'élément pivotant (3) par une bielle de raccordement (18), est monté de manière à pouvoir être entraîné par l'entraînement et déplacé le long d'une glissière de guidage (16),
**caractérisé en ce que**
la glissière de guidage est un rail de guidage (16) en forme d'arc de cercle, dont le centre du cercle se situe sur l'axe de rotation (2) de l'élément pivotant (3) ou est formé comme une courbe spatiale.

2. Dispositif d'entraînement selon la revendication 1,
**caractérisé en ce que** le système d'accouplement contient un câble d'entraînement (11), qui est guidé dans un tube (12) en direction de la glissière de guidage (16) et est relié à l'organe de raccordement (20).

3. Dispositif d'entraînement selon la revendication 1 ou 2,
**caractérisé en ce que** la bielle de raccordement (18) est montée sur l'élément pivotant (3) de façon pivotante autour d'un axe de pivotement (24), qui est approximativement perpendiculaire à l'axe de pivotement (2) de l'élément pivotant (3), afin de suivre une courbe spatiale à l'occasion du transfert du déplacement d'entraînement sur l'élément pivotant (3).

4. Dispositif d'entraînement selon la revendication 1 ou 3,
**caractérisé en ce que** la bielle de raccordement (18) peut être modifiée en longueur et peut être adaptée à la distance variable entre l'axe de rotation (2) de l'élément pivotant (3) et l'organe de raccordement (20) sur la glissière de guidage (16) de la courbe spatiale.

5. Dispositif d'entraînement selon l'une quelconque des revendications 1 à 4,
**caractérisé en ce que** l'élément pivotant (3) et la glissière de guidage ou le rail de guidage (16) sont montés sur un support principal (1) fixé au véhicule.

6. Dispositif d'entraînement selon la revendication 5,
**caractérisé en ce que** le rail de guidage (16) en forme d'arc de cercle est monté avec jeu sur le support principal (1).

7. Dispositif d'entraînement selon l'une quelconque des revendications 1 à 6,
**caractérisé en ce que** l'organe de raccordement (20) est un raccordement de câble (20), qui est reçu dans le rail de guidage (16) dans un canal de guidage (21) pour le câble d'entraînement (11), s'étend vers l'extérieur à travers une fente longitudinale (19) et est relié à la bielle de raccordement (18).

8. Dispositif d'entraînement selon la revendication 7,
**caractérisé en ce que** l'organe de raccordement de câble (22) est adapté à la courbure du rail de guidage (16).

9. Dispositif d'entraînement selon l'une quelconque des revendications 1 à 8,
**caractérisé en ce qu'**un actionnement supplémentaire peut être réalisé par le dispositif d'entraînement.

10. Dispositif d'entraînement selon la revendication 9,
**caractérisé en ce que**, pour un actionnement supplémentaire, une section de sortie du câble d'entraînement (11) est reliée à un élément destiné à être actionné.

11. Dispositif d'entraînement selon l'une quelconque des revendications 1 à 10,
**caractérisé en ce que** l'entraînement comprend un moteur électrique (9) ou plusieurs moteurs électriques montés en série.

12. Dispositif d'entraînement selon l'une quelconque des revendications 1 à 11,
**caractérisé en ce qu'**il est couplé à un essuie-glace, notamment à un essuie-glace arrière d'un véhicule automobile.

13. Dispositif d'entraînement selon l'une quelconque des revendications 1 à 11,
**caractérisé en ce qu'**il est couplé à une capote (6) d'un cabriolet (7).

14. Dispositif d'entraînement selon la revendication 13,
**caractérisé en ce que** l'élément pivotant (3) est une colonne principale (3) d'un quadrilatère articulé du type parallélogramme, destiné à supporter de façon pivotante les tiges de la capote (6), le quadrilatère articulé contenant la colonne principale (3) et une bielle principale (11), qui sont montées de façon pivotante d'une part sur le support principal (1) fixé à la carrosserie et d'autre part sur une bielle de toit (8) latérale des tiges de capote.

15. Dispositif d'entraînement selon l'une quelconque des revendications 2 à 14,
**caractérisé en ce que** le câble d'entraînement (11) entraîne simultanément deux éléments pivotants.
